# EUROPEAN PATENT APPLICATION

(11) **EP 3 318 977 A1**
(43) Date of publication of application: **09.05.2018**
(21) Application number: 16197357.3
(22) Date of filing: 04.11.2016
(51) Int. Cl.: G06F 13/40

(54) **COMPUTER SYSTEM WITH SPLIT MAINBOARD**

(71) Applicant: Hybridserver Tec IP GmbH, 6052 Hergiswil (CH)
(72) Inventor: DÜRKOP, Hendrik, 22397 Hamburg (DE); ZIELINSKI, Tobias, 22391 Hamburg (DE)
(74) Representative: Seemann & Partner Patentanwälte mbB

(57) **Abstract**

The invention relates to a computer system (2) having a mainboard, comprising at least one central processing unit (10), a chipset and a main memory (12) of the system (2), wherein the mainboard is split in at least a first part (4) and a second part (6), wherein the first part (4) and the second part (6) are linked via a local data link (18) and the at least one central processing unit (10) is arranged on the first part (4) and the chipset (22) is arranged on the second part (6) of the mainboard and wherein the first part (4) comprises a first connecting port (20_1) and the second part (6) comprises a second connecting port (20_2) and the local data link (18) is established between the first and the second connecting port (20_1, 20_2).

## Description

The invention relates to a computer system, comprising a mainboard, at least one central processing unit, a chipset and a main memory.

In a conventional computer system, there is a motherboard, which is most often a printed circuit board (PCB), having the core components of the system placed thereon. For example, there are slots for interface cards and peripheral devices, one or more central processing units (CPUs), a main memory and a control chipset for providing and managing the communication between these units.

In this traditional type of computer system, standards and functions of all the components are constant over lifetime. When a user buys such a system, it cannot be updated or changed without replacing the entire motherboard. Only little change, for example the insertion of further peripheral cards or the addition of an extra memory module, can be performed. However, restriction is placed on this kind of system upgrade, because all newly added components have to match the requirements of the motherboard and have to be compatible with the previous components in the system. If the user desires to use new standards, he is urged to replace the entire motherboard at the same time. This even applies in a situation in which only a single device of the motherboard needs to be upgraded because it does not support a new standard.

US 2009/0031062 A1 discloses a modularized motherboard including a first circuit board, a second circuit board and a connecting device. The first circuit board includes a northbridge chip, a CPU-socket and a first connecting port. The CPU-socket is coupled to the northbridge chip and is used for installing a CPU. The second circuit board is separate from the first circuit board. It includes a second connecting port and a southbridge chip. The southbridge chip is coupled to the northbridge chip via the second connecting port, a connecting device and the first connecting port. There is a design, in which the mainboard is split between the northbridge and the southbridge.

It is an object of the invention to provide a computer system, which is more flexible, in particular with respect to system repair and system upgrade.

The object is solved by a computer system having a mainboard, comprising at least one central processing unit, a chipset and a main memory of the system, wherein the computer system is further developed in that the mainboard is split in at least a first part and a second part, wherein the first part and the second part are linked via a local data link and the at least one central processing unit is arranged on the first part and the chipset is arranged on the second part of the mainboard and wherein the first part comprises a first connecting port and the second part comprises a second connecting port and the local data link is established between the first and the second connecting port.

In particular, the chipset is entirely arranged on the second part of the mainboard. In other words, a functionality of a chipset, said functionality being traditionally assigned to a northbridge chip and to a southbridge chip is arranged on the second part of the mainboard in its entirety.

Advantageously, the computer system according to aspects of the invention can be repaired or upgraded in a fast and simple way. The repair effort is very limited. This makes the repair fast, simple and economic. For example, a CPU can be replaced by simply replacing the first part of the mainboard. Further CPUs can be added to the system without replacing the entire mainboard. The same applies to the chipset. The chipset can be upgraded, updated or replaced if it needs to be changed without replacing the entire mainboard. In particular, there is no need to replace that part of the mainboard host-ing the CPU. This renders the repair and upgrade of the system very economic, when compared to traditional systems.

In addition to this, the computer system according to aspects of the invention is more flexible with respect to the manufacture of different versions, configurations or configuration levels of the system. The design is advantageously modular. Basically, there is no need for changing the design for a computer system having, for example, two CPUs and a system having eight CPUs. It is simply a question of adding more first parts having a matching number of CPUs.

According to an advantageous embodiment of the invention, the computer system further comprises at least one CPU-socket, which is arranged on the first part, wherein each central processing unit occupies one CPU-socket.

The CPU can be hardwired on the first part of the mainboard or it can be placed in a suitable socket. The application of a socket renders the system even more flexible.

In another advantageous embodiment of the invention, the main memory is arranged on the first part of the mainboard. It is further advantageous, if the computer system comprises at least one memory slot, which is arranged on the first part, wherein the main memory occupies at least one memory slot.

In particular, the memory and memory-slot, respectively, is directly connected to the CPU and the CPU-socket. The connection between the sockets is designed in that the main memory, which is inserted in the memory-slot, is directly connected or connectable to the CPU, which is inserted in the CPU-socket. In other words, the main memory can be directly connected to the CPU, which significantly enhances the performance of the computer system.

In another advantageous embodiment of the invention, a power supply and a central clock are further arranged in the first part and slots for connecting attached hardware devices to a local computer bus are further arranged on the second part of the mainboard. In particular, this includes that at least one IO-port is also arranged on the second part of the mainboard. Advantageously, these units or devices can easily be upgraded, repaired or changed when another configuration of the computer system is desired.

In still another advantageous embodiment, the computer system is configured in that the first part of the mainboard comprises at least two first sub-parts. In a first embodiment, the second part and the at least two first sub-parts of the mainboard are arranged in a sandwich-configuration with the two first sub-parts being arranged on either side of the second part. The sandwich configuration provides a particular space saving arrangement.

In a second embodiment, the second part and the at least two first sub-parts of the mainboard are arranged in that a first one of the first sub-parts is placed adjacent to a first outer edge of the second part and a second one of the first sub-parts is placed adjacent to a second outer edge of the second part.

The outer edges of the second part of the mainboard are in particular distinct. In other words, there is only one single first sub-part being arranged adjacent to one single outer edge of the second part of the mainboard. The configuration, where the first sub-parts are arranged adjacent to an outer edge of the second part of the mainboard is a particularly flat configuration. This is, for example, advantageous for a server having a blade design.

In addition to this, there are further geometric arrangements possible. According to further embodiments, the second part can have the shape of a pentagon, hexagon, octagon, and so forth. Naturally, there are five, six or eight first sub-parts being arranged around it.

In still another advantageous embodiment of the invention, the mainboard is split up into three parts, the first part, the second part and a third part for interconnecting the first and the second part, wherein the third part comprises a third and a fourth connecting port, wherein the local data link is established between the first and the second connecting port in that a first local data link is established between the first and the third connecting port and a second local data link is established between the fourth and the second connecting port.

In other words, the third part serves to interconnect the first and the second part. This central element, namely the third part, renders the design very flexible. The first and the second parts of the mainboard can be arranged on either side of the third part, wherein the configuration with respect, for example, to the number of central processing units or with respect to the periphery can be easily changed, adapted, upgraded, etc.

Advantageously, the first part comprises a plurality of first sub-parts, each comprising at least one CPU or CPU-socket for inserting a CPU, and the first sub-parts are arranged on one side of the third part in that each first sub-part includes an at least substantially rectangular angle with the third part.

The first sub-parts are in other words stacked on one side of the third part. The word "stacking" in this context means that there is the necessary void space left between the individual first sub-parts. This is needed, for example, for heat dissipation from the components being arranged on the first parts of the mainboard.

In still another advantageous embodiment, the computer system is enhanced in that at least parts of the chipset are implemented in a Field Programmable Gate Array (FPGA) and/or in an application-specific integrated circuit (ASIC), wherein the FPGA and/or the ASIC, which are/is arranged on the second part of the mainboard, wherein in particular, the second part comprises a socket for receiving the FPGA or the ASIC.

Implementing at least part of the chipset in an FPGA or in an ASIC renders the chipset more flexible and faster. In particular, the entire chipset is implemented in the FPGA or ASIC. This renders the design highly flexible. This particularly applies to a situation in which the FPGA or ASIC is placed in a socket.

According to further advantageous aspects of the invention, the local data link between the first and the second connecting part is established by a rigid bridge, a flexible cable or via a printed circuit board (PCB). Furthermore, these data links can be established via optical transceivers, via a laser link, via RF-transmission, or the like. Basically, the links can be wireless.

The same applies to the first and the second local data link, which is established between the first and the third connecting port and the fourth and the second connecting port, respectively.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:
- FIG. 1: a simplified schematic top view of a computer system,
- FIG 2: a simplified side view of a computer system,
- FIG. 3: a simplified side view on another computer system,
- FIG. 4: a further simplified side view on a computer system and
- FIG. 5: a simplified top view on a further computer system.

In the drawings, the same or similar types of elements or respectively corresponding parts are provided with the same reference numbers in order to prevent the item from needing to be reintroduced.

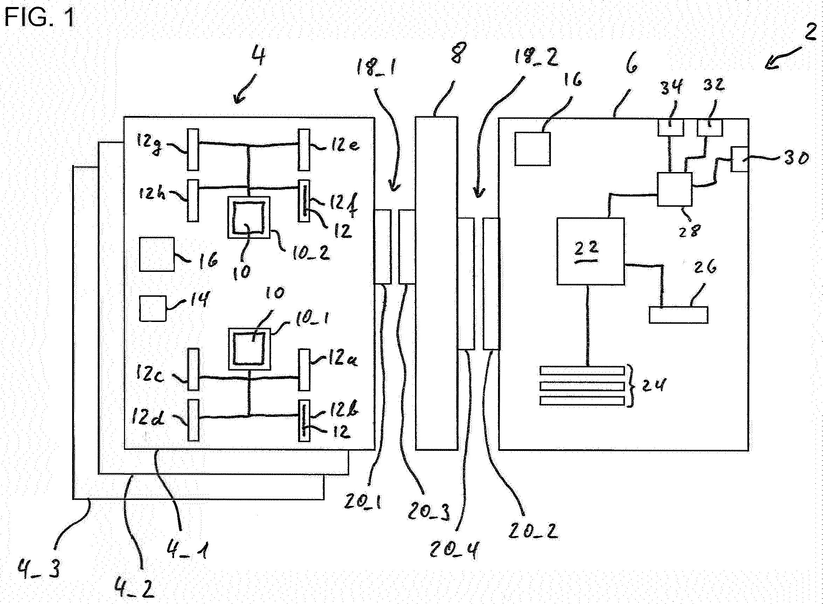

In FIG. 1, there is a computer system 2 having a mainboard, which is split in three parts. There is a first part 4, a second part 6 and a third part 8. The second part 6 is also referred to as the "flashnet board". The third part 8 is also referred to as the "backboard". The third part 8 is for interconnecting the first part 4 and the second part 6.

By way of an example, the first part 4 comprises three first sub-parts 4_1, 4_2 and 4_3. The three first sub-parts 4_1..4_3 are configured identical. Hence, only the first one of the sub-parts, namely the uppermost sub-part 4_1, will be explained in more detail. Generally, the first sub-parts 4_1, 4_2 and 4_3 will also be referred to as the first part 4.

The first part 4 comprises a first CPU-socket 10_1 and a second CPU-socket 10_2. In the CPU-sockets 10_1, 10_2, a central processing unit (CPU) 10 is placed. According to other embodiments, one or more of the CPUs 10 are directly hardwired to the first part 4. Each CPU-socket 10_1, 10_2 is for inserting a single central processing unit 10 in it. In addition to this, there are memory slots 12a to 12d for inserting main memory 12 of the system. By way of an example, the main memory 12 is inserted in the memory slot 12b and 12f. Additional memory can be added to the system using the free memory slots 12a, 12c, 12d, 12e, 12g and 12h. The memory slots 12a..12d are directly connected to the first CPU-socket 10_1. Hence, it is possible that the CPU 10, which is inserted in the first CPU-socket 10_1, directly communicates with main memory 12, which is inserted in one or more of the memory slots 12a..12d. According to the depicted embodiment, the CPU 10 directly communicates with the memory 12 in memory slot 12b.

The same applies to the second CPU-socket 12_2 and the memory slots 12e..12h. The memory slots 12e..12h are directly connected to the second CPU-socket 12_2. Hence, the CPU 10, which is inserted in the second CPU-socket 12_2, can directly communicate with memory 12 that is inserted in one or more of the memory sockets, in particular with the memory 12 in memory slot 12f.

In addition to this, there is a central clock 14 and a power supply 16 on the first part 4 of the mainboard. In the embodiment of FIG. 1, the first part 4 of the mainboard comprises two CPU-sockets 10_1 and 10_2. According to further embodiments, which are not depicted, there can be less or more CPU-sockets 10_1, 10_2. For example, the first part 4 of the mainboard can comprise five CPUs or CPU-sockets or eight CPUs or CPU-sockets. The CPU sockets 12a..12h are similarly configured as shown in FIG. 1. In particular, there are memory slots 12a..12h being directly connected to each single CPU-socket 10_1, 10_2 in that the central processing unit 10 being inserted in the CPU-socket 10_1, 10_2 can directly communicate with the main memory 12, which is inserted in the corresponding memory slot 12a..12h.

Between the mainboard and the third part 8 of the mainboard, namely the backboard, there is a first local data link 18_1. Between the third part 8 and the second part 6, there is a second local data link 18_2. The local data links 18_1, 18_2 are generally also referred to as a local data link 18. This local data link 18 conncets the first part 4 and the second part 6 of the mainboard. For example, the first local data link 18_1 is established between a first connecting port 20_1 being arranged on the first part 4 and a third connecting port 20_3 being arranged on the third part 8. The first connecting port 20_1 and the third connecting port 20_3 are, for example, matching parts of a 150 pin connector. Each of the first sub-parts 4_1..4_3 is equipped with a first connecting port 20_1, respectively. The third part 8 comprises a matching number of third connecting ports 20_3. Hence, each of the first sub-parts 4_1..4_3 is connected to the third part 8 using connecting ports as exemplarily explained with respect to the first sub-part 4_1.

For establishing the second local data link 18_2, there is a fourth connecting port 20_4 being arranged on the third part 8 and a second connecting port 20_2 being arranged on the second part 6. The fourth and the second connecting ports are, for example, matching parts of a 500 pin connector.

The second part 6 includes the chipset 22 of the computer system 2. The chipset 22 is entirely arranged on the second part 6 of the computer system 2. In the embodiment of FIG. 1, the chipset 22 is implemented in a Field Programmable Gate Array (FPGA) or in an Application Specific Integrated Circuit (ASIC). At least parts of the chipset 22 are implemented in the FPGA or in the ASIC. In particular, the chipset 22 is entirely implemented in the FPGA or in the ASIC. In particular, the second part 6 comprises a socket for receiving the FPGA or the ASIC. Furthermore, it is also possible the second part comprises a chipset comprising a northbridge and a southbridge.

The second part 6 further comprises extension slots 24 for inserting extended memory of the chipset 22, i.e. extended memory of the FPGA or the ASIC. The extended memory attached to the chipset 22, for example the FPGA can be for example DDR3, DDR4, HBM2, GDDR5, QDR2 or the like. In addition to this, the FPGA can include the media controller. The same applies to the ASIC. The extended memory can also be hardwired on the second part 6.

The chipset 22 is further connected to a QSFP-interface 26 (Quad Small Form-factor Pluggable) for high speed data communication applications. The QFSP interface 26 is for example a port being specified for gigabit Ethernet, fiber channel or QDR InfiniBand. The chipset 22 is further coupled to a micro controller 28 being further connected to, for example, a LAN-port 30, a USB-port 32 or an SD-Card Slot 34. In addition to all these entities, a further power supply unit 16 can be arranged on the second part 6 of the mainboard. The micro controller 28 can also be arranged on a suitable socket.

It is an important feature of the computer system 2 according to aspects of the invention that the central processing unit 10 (CPU), is arranged on one part of the mainboard (namely the first part 4), while the chipset 22 and various other elements of the computer system 2 are arranged on another part, namely on the second part 6, of the mainboard. The first part 4 and the second part 6 communicate via a local data link 18, which is, for example, established using the third part 8. However, the first and the second part 4, 6 can also be directly linked.

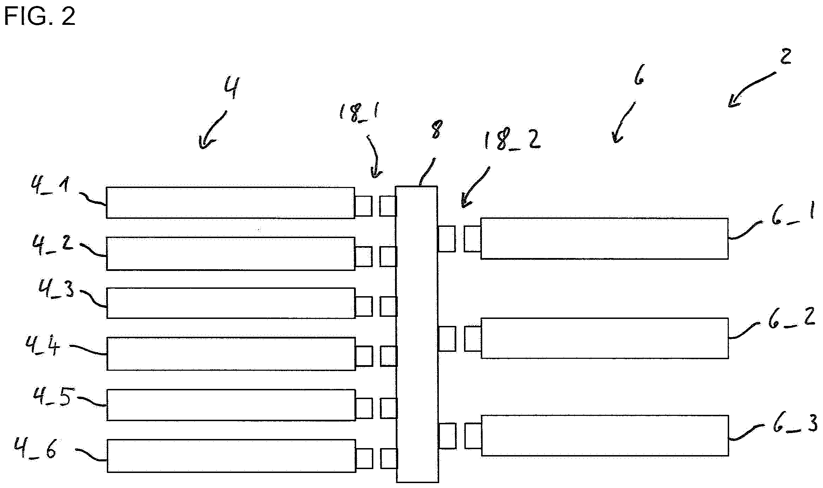

In FIG. 2, there is a simplified side view of a computer system 2, wherein the mainboard comprises a first part 4, a second part 6 and a third part 8. In this simplified side view, there is a system having a first part 4 comprising six first sub-parts 4_1..4_6. These are connected to the third part 8 via respective first local data links 18_1. The computer system 2 further comprises a second part 6 having, by way of an example, three second sub-parts 6_1..6_3. The three second sub-parts 6_1..6_3 are connected to the third part 8 via respective second local data links 18_2. The local data links 18_1, 18_2 can be established using connecting ports, for example 150 pin and 500 pin connectors, respectively. These have been explained in further detail with reference to FIG. 1. The first sub-parts 4_1..4_6 project in planes being substantially rectangular to a plane in which the third part 8 is arranged. The same applies to the second sub-parts 6_1..6_3.

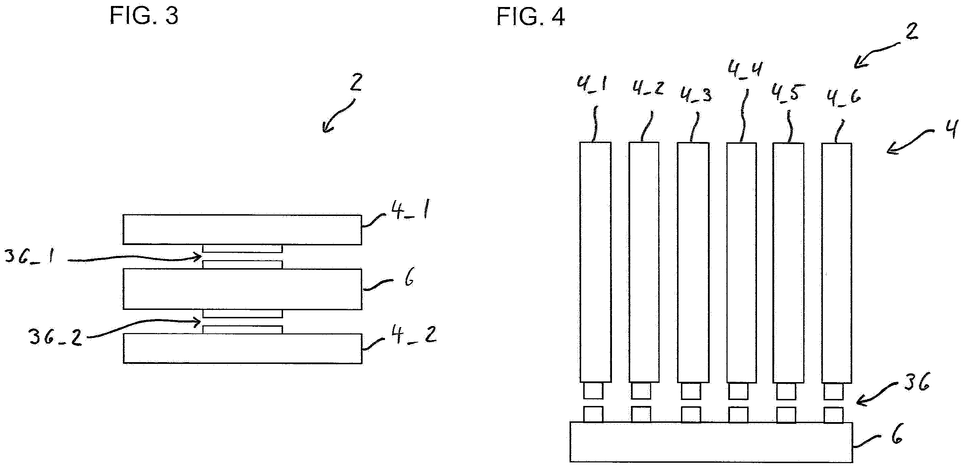

In FIG. 3, there is a further configuration of the computer system 2. According to this embodiment, the first part 4 of a main board comprises a two first sub-parts 4_1 and 4_2. They are arranged in a sandwich configuration on either side of the second part 6. The first and the second local data link are not necessary in this embodiment, since it completely dispenses with the third part 8. Instead of this, there is a direct local data link 36, namely first direct local data link 36_1 and a second direct local data link 36_2 between the first part 4 and the second part number one 6_1 and the first part 4 and the second part number two 6_2, respectively. The direct local data links 36_1, 36_2 are similarly configured to the local data links 18. They are established using suitable connecting ports.

In FIG. 4, there is a computer system 2 having still another configuration. According to this embodiment, the first part 4 comprises a plurality of first sub-parts, namely six first sub-parts 4_1..4_6. Similar to the embodiment in FIG. 2, every first sub-part 4_1..4_6 comprises a CPU-socket 10 for inserting a CPU 10. However, in contrast to the embodiment in FIG. 2, the first sub-parts 4_1..4_6 are not linked to a third part 8 but are instead directly connected to the second part 6. Hence, there is a plurality of direct local data links 36 between each of the first sub-parts 4_1..4_6 and the second part 6. The direct local data links 36 are implemented using suitable connecting ports. Every first part 4_1..4_6 includes a substantially rectangular angle with the second part 6. This is similar to the embodiment of FIG. 2, where the first parts 4_1..4_6 include a substantially rectangular angle with the third part 8.

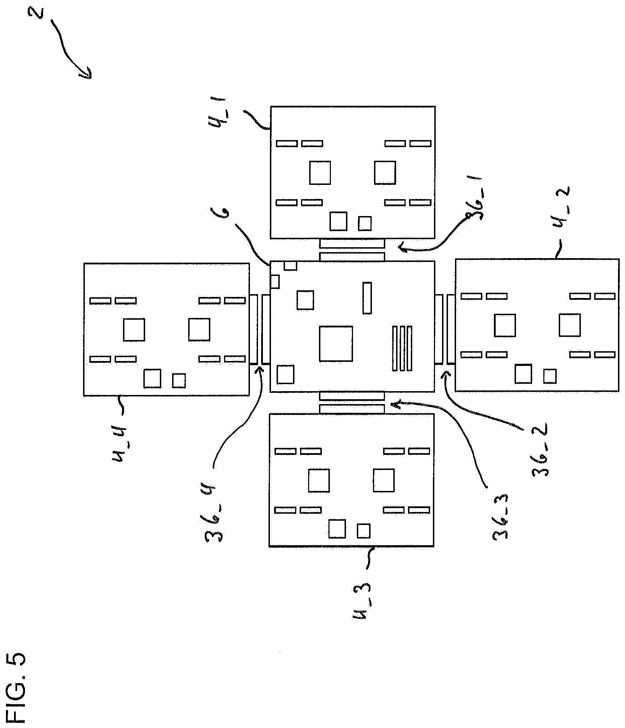

While the embodiments in FIG. 2 to are particularly space saving, the computer system 2 in FIG. 5 is particularly flat. According to this embodiment, the computer system 2 is for example well suited for a blade server or the like. The first part 4 is split up into four first sub-parts 4_1..4_4, wherein each of the sub-parts 4_1..4_4 contains two CPUs 10 or CPU-sockets 10_1, 10_2. A respective one of the first parts 4_1..4_4 is arranged adjacent to an outer edge of the second part 6. There are direct local links 36_1..36_4 connecting the first sub-parts 4_1..4_4 and the second part 6.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

### List of References

- 2: computer system
- 4: first part
- 4_1..4_6: first sub-parts
- 6: second part
- 6_1..6_3: second sub-parts
- 8: third part
- 10: central processing unit (CPU)
- 10_1, 10_2: CPU-sockets
- 12: main memory
- 12a..12h,: memory slots
- 14: central clock
- 16: power supply
- 18_1, 18_2, 18: local data link
- 20_1..20_4: connecting ports
- 22: chipset
- 24: extension slots
- 26: QSFP-interface
- 28: micro controller
- 30: LAN-port
- 32: USB-port
- 34: SD-Slot
- 36_1..36_4, 36: direct local data links

## Claims

1. A computer system (2) having a mainboard, comprising at least one central processing unit (10), a chipset and a main memory (12) of the system (2), **characterized in that** the mainboard is split in at least a first part (4) and a second part (6), wherein the first part (4) and the second part (6) are linked via a local data link (18) and the at least one central processing unit (10) is arranged on the first part (4) and the chipset (22) is arranged on the second part (6) of the mainboard and wherein the first part (4) comprises a first connecting port (20_1) and the second part (6) comprises a second connecting port (20_2) and the local data link (18) is established between the first and the second connecting port (20_1, 20_2).

2. The computer system (2) according to claim 1, further comprising at least one CPU-socket (10_1, 10_2), which is arranged on the first part (4), wherein each central processing unit (10) occupies one CPU-socket (10_1, 10_2).

3. The computer system (2) according to claim 1 or 2, wherein the main memory (12) is arranged on the first part (4) of the mainboard.

4. The computer system (2) according to claim 3, further comprising at least one memory slot (12a..12h), which is arranged on the first part (4), wherein the main memory occupies at least one memory slot (12a..12h).

5. The computer system (2) according to anyone of the preceding claims, wherein the main memory (12) is directly connected to the central processing unit (10).

6. The computer system (2) according to anyone of the preceding claims, wherein a power supply (16) and a central clock (14) are further arranged in the first part (4) and slots for connecting attached hardware devices to a local computer bus are further arranged on the second part (6) of the mainboard.

7. The computer system (2) according to anyone of the preceding claims, wherein the first part (4) of the mainboard comprises at least two first sub-parts (4_1, 4_2), and
the second part (6) and the at least two first sub-parts (4_1, 4_2) of the mainboard are arranged in a sandwichconfiguration with the two first sub-parts (4_1, 4_2) being arranged on either side of the second part (6)
or
the second part (6) and the at least two first sub-parts (4_1, 4_2) of the mainboard are arranged in that a first one of the first sub-parts (4_1) is placed adjacent to a first outer edge of the second part (6) and a second one of the first sub-parts (4_2) is placed adjacent to a second outer edge of the second part (6).

8. The computer system (2) according to anyone of claims 1 to 6, wherein the mainboard is split up into three parts, namely the first part (4), the second part (6) and a third part (8) for interconnecting the first and the second part (4, 6), wherein the third part (8) comprises a third and a fourth connecting port (20_3, 20_4), wherein the local data link (18) is established between the first and the second connecting port (20_1, 20_2) in that a first local data link (18_1) is established between the first and the third connecting port (20_1, 20_3) and a second local data link (18_2) is established between the fourth and the second connecting port (20_4, 20_2).

9. The computer system (2) according to claim 8, wherein the first part (4) comprises a plurality of first sub-parts (4_1..4_6), each comprising at least one CPU (10) or CPU-socket (10_1,10_2) for inserting a CPU, and the first sub-parts (4_1..4_6) are arranged on one side of the third part 8 in that each first sub-part (4_1..4_6) includes an at least substantially rectangular angle with the third part (8).

10. The computer system (2) according to anyone of the preceding claims, wherein at least parts of the chipset (22) are implemented in a Field Programmable Gate Array (FPGA) and/or in an Application-Specific Integrated Circuit (ASIC), wherein the FPGA and/or the ASIC, are/is arranged on the second part (6) of the mainboard, wherein in particular, the second part (6) comprises a socket for receiving the FPGA or the ASIC.
